# EUROPÄISCHE PATENTSCHRIFT

(11) **EP 0 634 206 B1**
(45) Veröffentlichungstag und Bekanntmachung des Hinweises auf die Patenterteilung: **24.03.1999**
(21) Anmeldenummer: 94110462.2
(22) Anmeldetag: 05.07.1994
(51) Int. Cl.: B01D 53/70, B01D 53/86, A62D 3/00

(54) **Verfahren zur Zersetzung organischer Halogenverbindungen in staubhaltigen Abgasen**
Process for destructing halogenated organic compounds in dust containing gases
Procédé de décomposition des composés organiques halogenés dans des gaz effluent contenant de la poussière

(30) Priorität: 17.07.1993 DE 4324085
(43) Veröffentlichungstag der Anmeldung: 18.01.1995
(73) Patentinhaber: BASF Aktiengesellschaft, 67063 Ludwigshafen (DE)
(72) Erfinder: Hess, Klaus, Dr., D-67098 Bad Dürkheim (DE); Spahl, Roland, Dr., D-64653 Lorsch (DE); Horn, Hans Christoph, Dr., D-67245 Lambsheim (DE); Dorn, Ingo H., Dr., D-67125 Dannstadt-Schauernheim (DE); Dinkhauser, Günter, D-67117 Limburgerhof (DE); Joschek, Hans-Ingo, Dr., D-68163 Mannheim (DE)
(74) Vertreter: Isenbruck, Günter, Dr.

(56) Entgegenhaltungen:
- EP-A- 0 252 521
- EP-A- 0 402 122
- EP-A- 0 470 659
- EP-A- 0 488 331
- DE-A- 3 644 381
- DE-A- 4 013 340

## Beschreibung

Die vorliegende Erfindung betrifft ein verbessertes Verfahren zur Zersetzung von organischen Halogenverbindungen, die in staubhaltigen Gasen enthalten sind, durch oxidativen Abbau dieser Verbindungen mit Hilfe eines hierfür geeigneten festen Katalysators.

Organische Halogenverbindungen, wie vor allem polychlorierte Dibenzodioxine oder polychlorierte Dibenzofurane, sind hochtoxisch und meist karzinogen. Diese wie im folgenden häufig auch als Dioxine bezeichnenten Stoffe müssen aufgrund ihrer Eigenschaften praktisch vollständig abgebaut werden. Wegen der großen chemischen Stabilität dieser Verbindungen ist dies jedoch nur mit einem entsprechend hohen Aufwand zu realisieren.

Diese Aufgabenstellung gewinnt zunehmend an Bedeutung, das es viele chemische Prozesse gibt, bei denen staubhaltige Gase anfallen, die solche Verbindungen enthalten. Als Beispiel kann die Müllverbrennung genannt werden. Auch bei der Metallschrottaufbereitung durch Aufschmelzen der Abfallteile entstehen häufig Dioxine, was auf im Schrott vorhandenen Reste anderer Materialien wie Kunststoffen und Textilien zurückzuführen ist.

Es ist allgemein bekannt, in Verbrennungsgasen enthaltene organische Bestandteile in Gegenwart von Sauerstoff an hierfür geeigneten festen Katalysatoren zu zersetzen. Besondere Bedeutung hat diese Abgasbehandlung im Falle von organischen Halogenverbindungen, darunter vor allem der hochgiftigen Dioxine.

Ist in dem Abgas Staub vorhanden, bereitet die Entgiftung erhebliche technische Schwierigkeiten, weil sich das Dioxin nicht nur in der Gasphase befindet, sondern auch am Staub adsorbiert ist.

Nach der DE-A 39 33 480 (Seite 2, Zeilen 24 bis 25) trennt man den Staub zunächst bei einer Temperatur unterhalb von etwa 180°C ab, wobei allerdings ein dioxinhaltiger Staub anfällt. Das an den Staub gebundene Dioxin kann, wie in der EP-B 252 521 (Seite 4, Zeilen 36 bis 50) geschildert, durch Erhitzung des Staubes auf eine Temperatur von 200 bis 550°C unter weitgehendem Ausschluß von Sauerstoff abgetrennt und thermisch zersetzt werden.

Eine andere Möglichkeit (DE-A 39 33 480) besteht darin, die Staubabscheidung bei Temperaturen von bis zu 500°C vorzunehmen, wobei die Dioxine gleichzeitig zersetzt werden.

Beide Methoden haben jedoch den Nachteil, daß sie wegen der hohen Temperaturen energieaufwendig sind und äußerst hitzebestädige Werkstoffe für die Apparaturen erfordern.

Die Entstaubung der Gase bei einer Temperatur von 250 bis 500°C wurde bisher kaum in Betracht gezogen, weil hierbei nach der DE-A 39 33 480 (Seite 2, Zeilen 19 bis 21) eine Neubildung der Dioxine zu beobachten ist.

In der DE-A 36 44 381 werden zwar Gase bei einer Temperatur von 300°C entstaubt, der abgeschiedene Staub enthält jedoch noch eine beträchtliche Menge an Dioxin und muß in die Verbrennung zurückgeführt werden. (Spalte 3, Zeilen 30 bis 33)

Die durch die vorliegende Erfindung zu lösende Aufgabe besteht darin, daß der Dioxingehalt auch im abgeschiedenen Staub verringert wird, und zwar trotz einer unter solchen Bedingungen (Staub, 250 -> T -> 500°C) zu erwartenden Dioxinneubildung.

Gegenstand der Erfindung ist ein Verfahren zur Zersetzung von organischen Halogenverbindungen, die in staubhaltigen Gasen enthalten sind, unter Verringerung der Bildung von Dioxinen durch oxidativen Abbau mit Hilfe hierfür geeigneter fester Katalysatoren, wobei die staubhaltigen Gase nach einer der folgenden Varianten behandelt werden:
a) Vorheriges Abschneiden des Staubes von den Gasen bei 250 bis 500°C und Leiten des staubfreien Gases zusammen mit Sauerstoff oder einem Sauerstoff enthaltenden Gas über den Katalysator,
b) vorheriges Abscheiden des Staubes von den Gasen bei einer Temperatur unterhalb von 250°C, Desorbieren der organischen Halogenverbindungen in einem sauerstoffhaltigen Gasstrom bei 250 bis 500°C vom Staub und Leiten des Gasstroms über den Katalysator,
c) Leiten des staubhaltigen Gases in Gegenwart von Sauerstoff bei 250 bis 500°C über den Katalysator und anschließendes Abtrennen des Staubes,
   dadurch gekennzeichnet, daß die staubhaltigen Gase einen Kohlenstoffgehalt von weniger als 0,6 Gew.- % aufweisen.

Vorzugsweise stellt man den Kohlenstoffgehalt auf nicht mehr als 0,4 Gew.-% ein.

Das erfindungsgemäße Verfahren kann auf die Zersetzung von aromatischen Halogenverbindungen, vorzugweise von aromatischen Chlorverbidungen und besonders bevorzugt von Polychlordibenzodioxinen und/oder Polychlordibenzofuranen angewandt werden.

Durch den relativ geringen Kohlenstoffgehalt im Abgas, welcher in bekannter Weise durch eine entsprechende verbrennungsführung erzielt werden kann, läßt sich die Bildung der Dioxine verringern. Hierbei erweist es sich als vorteilhaft, wenn der im Abgas enthaltene Kohlenstoff vorwiegend als Graphit aufgebaut ist. Der Kohlenstoffgehalt kann beispielsweise durch eine Nachbrennkammer, welche einen Drehrohrofen nachgeschaltet ist, verringert werden. Die Temperaturen in der Nachbrennkammer werden vom Chlorgehalt im Abgas beinflußt, sie liegen üblicherweise bei etwa 1000 bis 1200°C, dabei liegt der Sauerstoffgehalt üblicherweise bei etwa 10 Vol.-%.

Es wurde überraschenderweise festgestellt, daß unter diesen Bedingungen bei Temperaturen von 250 bis 500°C ein fast dioxinfreier Staub abgeschieden werden kann.

Im folgenden seien die Ausführungsformen des erfindungsgemäßen Verfahrens näheres erläutert.

### Methode a)

Diese Methode empfiehlt sich besonders, wenn Staubabscheider für den Betrieb bei Temperaturen von 250 bis 500°C vorhanden sind, wofür beispielsweise Elektrofilter oder auch Zyklone in Betracht kommen. Der abgeschiedene Staub enthält nur noch geringe Mengen an Dioxin, wodurch der Aufwand für die Entsorgung des Staubes stark verringert wird.

### Methode b)

Diese Ausführungsform hat den Vorteil der Staubabscheidung bei relativ tiefen Temperaturen, so daß hier beispielsweise auch einfache und kostengünstige Gewebefilter verwendet werden können. Der abgeschiedene Staub wird in eine zweite Kammer geführt, wo er mittels des sauerstoffhaltigen Gasstromes bei 250 bis 500°C vom Dioxin befreit wird.

### Methode c)

Diese Variante ist vor allem bei Gasen mit relativ geringem Staubgehalt zweckmäßig. Das staubhaltige Gas wird direkt in Gegenwart von Sauerstoff bei Temperaturen von 250 bis 500°C über den Katalysator geleitet, und anschließend wird der Staub abgeschieden.

In dem für das Verfahren angegebenen Temperaturbereich werden Temperaturen von 300 bis 400°C bevorzugt.

Die bei dem erfindungsgemäßen Verfahren zur Zerstörung der Dioxine eingesetzten Katalysatoren sind allgemein bekannt und umfangreich beschrieben (DE-A 39 33 480, Seite 2, Zeilen 49 bis 60). Sie basieren häufig auf Titan- oder Eisenoxid und können mit Nickel, Chrom oder Kupfer dotiert sein. Sie werden oft auch als "DENOX"-Katalysatoren bezeichnet, da sie weiterhin die Fähigkeit aufweisen, im Gas enthaltene Stickoxide zu elementarem Stickstoff zu reduzieren.

Das erfindungsgemäße Verfahren bietet eine einfache und kostengünstige Möglichkeit, einen praktisch dioxinfreien Staub abzuscheiden. Zusätzliche Aufarbeitungsschritte, beispielsweise die thermische Behandlung des abgeschiedenen Staubes in einem geschlossenen System, sind nicht erforderlich.

### Beispiel

In einer großtechnischen Anlage zur Verbrennung von Chemieabfällen fiel ein Abgasvolumenstrom von 133 000 m³_{N.f.}/h an, der rund 13 Vol.-% Wasser und ca. 1000 mg/m_{N}³ an Staub enthielt. Das Abgas wurde einem Elektrofilter zugeführt, das bei einer Temperatur von ca. 320°C betrieben wurde.

Durch Dioxinmessungen wurde im Abgas am Eintritt in das Elektrofilter eine Konzentration von 1 ngTE/m_{N}³ bestimmt (TE = Toxizitätsäquivalent). Mittels des Elektrofilters konnte der Staubgehalt im Abgas von ca. 1000 mg/m_{N}³ auf unter 10 mg/m_{N}³ gesenkt werden.

Der Dioxingehalt des abgeschiedenen Staubes lag unter 0,3 ng TE/g, der Kohlenstoffgehalt (organisch) des Staubes bei etwa 0,4 Gew.-%. Die Dioxinkonzentration im Abgas hinter dem Elektrofilter betrug 1,5 ng TE/m_{N}³.

Hinter dem Elektrofilter wurde ein Teilstrom von ca. 122 m³_{N.f}/h abgezweigt, der mittels eines BASF-Katalysators des Typs 0-4-86 gereinigt wurde. Dieser Katalysator besteht hauptsächlich aus Titanoxid und Wolframoxid, weitere Verbindungen wie Vanadium sind nur in relativ geringen Mengen enthalten. Der Katalysator bestand aus insgesamt 1600 Zellen mit einem quadratischen Querschnitt von jeweils 150 x 150 mm. Die geometrische Oberfläche betrug etwa 880 m²/m³.

Die Gehalte an Dioxinen wurden gemäß VDI-Richtlinie 3499 bestimmt.

Diese Methode besteht im wesentlichen darin, daß man den zu analysierenden Gasstrom mit einer gekühlten Sonde entnimmt, die enthaltenen Staubreste mit Hilfe eines Partikelfilters abtrennt und anschließend noch im Gasstrom vorhandene Dioxine durch Abkühlung bzw. Adsorption abtrennt. Die Proben werden in bekannter Weise analytisch analysiert.

## Patentansprüche

1. Verfahren zur Zersetzung von organischen Halogenverbindungen, die in staubhaltigen Gasen enthalten sind, unter Verringerung der Bildung von Dioxinen durch oxidativen Abbau mit Hilfe hierfür geeigneter fester Katalysatoren, wobei die staubhaltigen Gase nach einer der folgenden Varianten behandelt werden:
a) Vorheriges Abschneiden des Staubes von den Gasen bei 250 bis 500°C und Leiten des staubfreien Gases zusammen mit Sauerstoff oder einem Sauerstoff enthaltenden Gas über den Katalysator,
b) vorheriges Abscheiden des Staubes von den Gasen bei einer Temperatur unterhalb von 250°C, Desorbieren der organischen Halogenverbindungen in einem sauerstoffhaltigen Gasstrom bei 250 bis 500°C vom Staub und Leiten des Gasstroms über den Katalysator,
c) Leiten des staubhaltigen Gases in Gegenwart von Sauerstoff bei 250 bis 500°C über den Katalysator und anschließendes Abtrennen des Staubes,
dadurch gekennzeichnet, daß die staubhaltigen Gase einen Kohlenstoffgehalt von weniger als 0,6 Gew.- % aufweisen.

2. Verfahren nach Anspruch 1, dadurch gekennzeichnet, daß man den Kohlenstoffgehalt auf nicht mehr als 0,4 Gew.-% einstellt.

3. Verfahren nach Anspruch 1 oder 2, dadurch gekennzeichnet, daß man den Kohlenstoffgehalt mit Hilfe einer Nachbrennkammer, welche einem Drehrohrofen nachgeschaltet ist, einstellt.

4. Verfahren nach einem der Ansprüche 1 bis 3, dadurch gekennzeichnet, daß man aromatische Chlorverbindungen zersetzt.

5. Verfahren nach Anspruch 4, dadurch gekennzeichnet, daß man Polychlordibenzodioxine und/oder Polychlordibenzofurane zersetzt.

## Claims

1. A process for decomposing organohalogen compounds which are present in dust-laden gases, with a reduction in the formation of dioxins, by oxidative breakdown with the aid of solid catalysts suitable for this purpose, where the dust-laden gases are treated by one of the following variants
a) previous deposition of the dust from the gases at 250-500°C, and the dust-free gas being passed together with oxygen or an oxygen-containing gas over the catalyst,
b) previous deposition of the dust at below 250°C, the organohalogen compounds being desorbed from the dust in an oxygen-containing gas stream at 250-500°C, and the gas stream being passed over the catalyst, or
c) the dust-laden gas being passed in the presence of oxygen over the catalyst at 250-500°C, and the dust being subsequently removed wherein the dust-laden gases have a carbon content of less than 0.6% by weight.

2. A process as claimed in claim 1, wherein the carbon content is adjusted to not more than 0.4% by weight.

3. A process as claimed in claim 1 or 2, wherein the carbon content is adjusted with the aid of an afterburner downstream of a drum-type furnace.

4. A process as claimed in any of claims 1 to 3, wherein there is decomposition of aromatic chlorine compounds.

5. A process as claimed in claim 4, wherein there is decomposition of polychlorodibenzodioxins and/or polychlorodibenzofurans.

## Revendications

1. Procédé de décomposition de composés halogénés organiques, qui sont contenus dans des gaz contenant des poussières, avec réduction de la formation de dioxines par dégradation par oxydation à l'aide de catalyseurs solides appropriés à cet effet, les gaz contenant des poussières étant traités suivant une des variantes suivantes :
a) une séparation préalable des poussières et des gaz à 250 jusqu'à 500°C et un guidage du gaz exempt de poussières conjointement à de l'oxygène ou à un gaz contenant de l'oxygène par-dessus le catalyseur,
b) une séparation préalable des poussières et des gaz à une température inférieure à 250°C, une désorption à partir des poussières des composés halogénés organiques dans un courant gazeux contenant de l'oxygène à 250 jusqu'à 500°C et un guidage du courant gazeux par-dessus le catalyseur,
c) un guidage du gaz contenant des poussières en présence d'oxygène à 250 jusqu'à 500°C par-dessus le catalyseur et une isolation ultérieure des poussières,
caractérisé en ce que les gaz contenant des poussières présentent une teneur en carbone inférieure à 0,6% en poids.

2. Procédé suivant la revendication 1, caractérisé en qu'on ajuste la teneur en carbone à pas davantage que 0,4% en poids.

3. Procédé suivant l'une des revendications 1 et 2, caractérisé en ce qu'on ajuste la teneur en carbone à l'aide d'une chambre de post-combustion qui est agencée en aval d'un four tubulaire rotatif.

4. Procédé suivant l'une des revendications 1 à 3, caractérisé en ce qu'on décompose des composés chlorés aromatiques.

5. Procédé suivant la revendication 4, caractérisé en ce qu'on décompose des polychlorodibenzodioxines et/ou des polychlorodibenzofurannes.
